(19) **Europäisches Patentamt**

**European Patent Office**

**Office européen des brevets**

(11) **EP 0 674 304 B1**

(12) **EUROPEAN PATENT SPECIFICATION**

(45) Date of publication and mention
of the grant of the patent:
**08.01.2003 Bulletin 2003/02**

(51) Int Cl.⁷: **G09G 3/36**

(21) Application number: **95301944.5**

(22) Date of filing: **23.03.1995**

(54) **Liquid crystal device**

Flüssigkristallanzeigegerät

Dispositif d'affichage à cristaux liquides

(84) Designated Contracting States:
**DE FR GB**

(30) Priority: **23.03.1994 JP 5224694**

(43) Date of publication of application:
**27.09.1995 Bulletin 1995/39**

(73) Proprietor: **SEIKO INSTRUMENTS INC.**
**Chiba-shi, Chiba 261 (JP)**

(72) Inventor: **Hanami, Takayoshi,**
**c/o Seiko Instruments Inc.**
**Chiba-shi, Chiba 261 (JP)**

(74) Representative: **Sturt, Clifford Mark et al**
**Miller Sturt Kenyon**
**9 John Street**
**London WC1N 2ES (GB)**

(56) References cited:
**EP-A- 0 420 129**      **EP-A- 0 443 248**
**US-A- 4 824 211**

**Description**

The present invention relates to a photoelectric device using liquid crystal and used in a system such as a computer terminal, an image display apparatus, and a shutter, and more particularly, a liquid crystal photoelectric device driven with a low voltage.

The twisted nematic type of liquid crystal used in the prior art liquid crystal device has the structure in which a liquid crystal molecule layer is twisted 90 degrees. In driving the liquid crystal device, since the number of driving circuits and the number of connections of the electrode terminals increase in correspondence with the increase of the number of segments, a time divisional driving system is generally used widely based on an optimal bias method when the liquid crystal device requires a large number of pixels as in a dot matrix type of liquid crystal device.

The time divisional driving system will be described below.

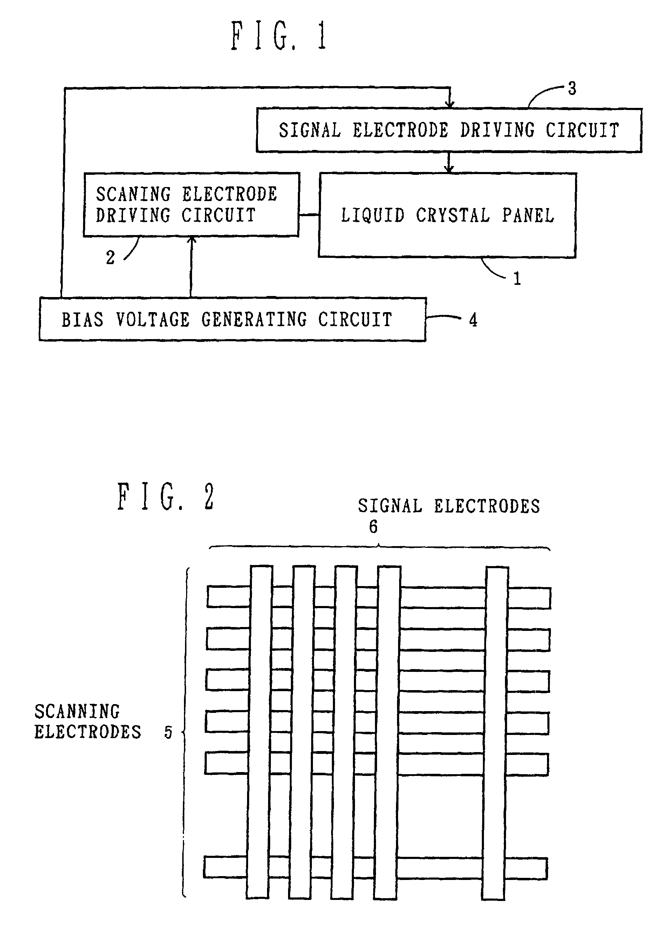

As shown in Fig. 2, a group of scanning electrodes 5 and a group of signal electrodes 6 are made to oppose to each other in a matrix manner. Each of the scanning electrodes 5 corresponding to lines in the device are sequentially supplied with a selection waveform. The signal electrodes 6 are supplied with an ON waveform or OFF waveform synchronously with the selection waveform of the scanning electrodes 5.

All the pixels formed as the intersections of the scanning electrodes 5 and the signal electrodes 6 can be set to an arbitrary display state by such an operation.

In the time divisional driving system, a selection waveform is sequentially applied to the scanning electrodes 5. After the selection waveform is completely applied to all the scanning electrodes 5, the same scanning is repeated again. The time period required to perform such scanning once is referred to as a frame period, and the frequency is referred to as a frame frequency. Further, a ratio of the selection time of the scanning electrodes, the time period required to apply the selection waveform to a scanning electrode, and the frame period is referred to as a duty ratio.

In the time divisional driving system, an electric field is applied to not only an ON pixel but also an OFF pixel. For this reason, a threshold value characteristic is necessary for the photoelectric characteristics of an LCD and in the time divisional driving system the waveform useful for the control of a display state is applied only during a constant period, known as the selection or selected period, of time which is determined based on a duty ratio while the waveform which does not relate to the control of the display state is applied during the remaining period, known as the non-selection or non-selected period, of time. Since the liquid crystal responds to the applied waveform during the non-selection period of time, the effective voltage of the applied waveform during the non-selection period of time must be devised to be constant.

This is because it is necessary to make the display state average between ON pixels or OFF pixels. The driving system thus devised is referred to as a voltage averaging method and all LCD's using a time divisional driving system employ this system.

The photoelectric effect of a non-memory type of LCD generally indicates the dependency on the effective voltage. Here, the effective voltage is a root mean square voltage Vrms and is defined by the following equation.

$$\text{Equation 1}$$

$$Vrms = \sqrt{\frac{1}{t_f} \int_0^{t_f} \{V(t)\}^2 \, dt}$$

An effective transmittance Toff of the optical characteristic responding to the effective voltage is defined by the following equation.

$$\text{Equation 2}$$

$$Toff = \frac{1}{t_f} \int_0^{t_f} T(t) \, dt$$

T(t): transmittance

Here, it should be noted that the transmittance T(t) is a periodic function having $t_f$ as a period. That is, the transmittance responds and varies to the temporal selection value to some extent and shows a dependency on the effective voltage as a whole.

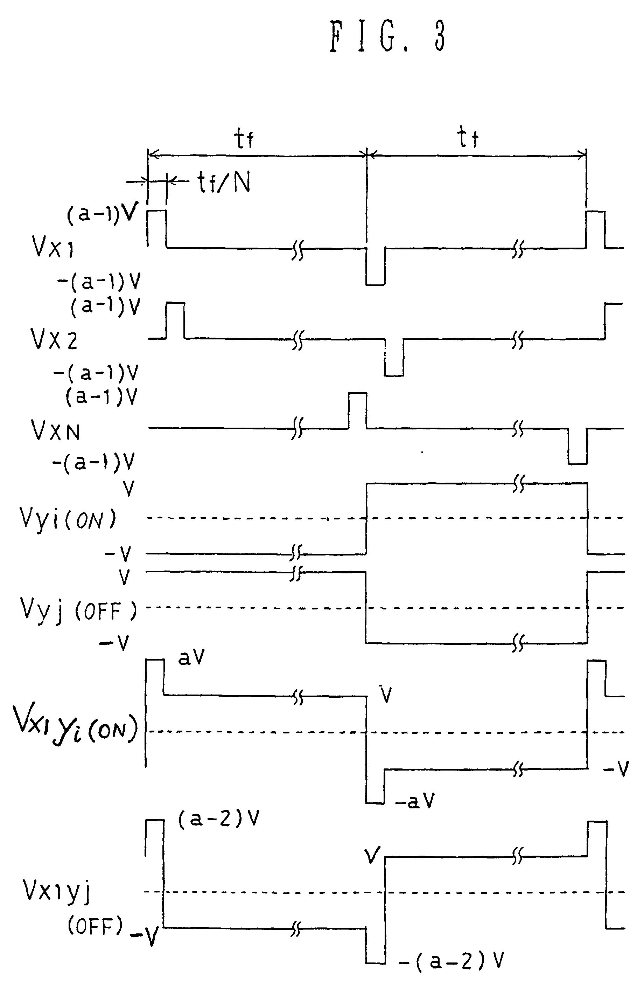

An example of the typical waveform in the voltage averaging method is shown in Fig. 3. In Fig. 3, the scanning electrodes are supplied with a potential of $|(a - 1)V|$ as the selected waveform, where "a" indicates a bias value and a positive constant, and a zero potential as the non-selection waveform. In this case, it is driven by a waveform with a positive polarity during the first frame period and is driven by a waveform with a negative polarity during the second frame period. This is the reason why it needs to be driven by an AC current in units of two frames.

On the other hand, the signal electrodes are supplied with the voltage of -V and +V as an ON waveform and the voltage of +V and -V as an OFF waveform during the frame period of the positive polarity and negative polarity respectively. As a result of this, the ON pixel is supplied with the waveform shown as $V_{x1yi}$ in Fig. 3, while the OFF pixel is supplied with the waveform shown as $V_{x1yj}$ of Fig. 3. Equation 3 and Equation 4 show the calculated effective voltage of the waveform applied to the ON pixel and OFF pixel respectively based on the equation 1.

Equation 3

$$Von = \sqrt{1 + \frac{a^2 - 1}{N}} \cdot V$$

N: the number of duties (duty ratio: 1/N)

Equation 4

$$Voff = \sqrt{1 + \frac{a^2 - 4a + 3}{N}} \cdot V$$

N: the number of duties (duty ratio: 1/N)

The ratio of both the effective voltage values is

Equation 5

$$\frac{Von}{Voff} = \sqrt{\frac{N + a^2 - 1}{N + a^2 - 4a + 3}}$$

The equation 5 is a general equation which gives the ratio of the ON voltage and the OFF voltages in the effective voltage when the apparatus is driven in accordance with the voltage averaging method as shown in Fig. 3. The effective voltage ratio is a function of "a" and the number of duties N and can be determined from the equation 5. At this time, In Equation 6 "a" shows the condition that the effective voltage ratio becomes maximum.

Equation 6

$$a = \sqrt{N} + 1$$

In this case, from the equation 5

Equation 7

$$\frac{Von}{Voff} = \sqrt{\frac{\sqrt{N} + 1}{\sqrt{N} - 1}}$$

The driving system in which the bias value a is set to be $\sqrt{N} + 1$ in accordance with the equations 6 and 7 under the 1/N duty ratio, is referred to as an optimal bias method. The optimal bias ratio, equal to 1/a, in various duty ratios is shown in the following table 1.

Table 1

| duty ratio | 1/8 | 1/16 | 1/32 | 1/64 |
|---|---|---|---|---|
| optimal bias ratio | 1/3.8 | 1/5.0 | 1/6.7 | 1/9.0 |

[See "Liquid Crystal Device Handbook", Nihon Gakuzyutu Shinkokai, 142 committee, pp.395 - 402]

EP 0420129A describes a liquid crystal device and driving method to improve display contrast. The device is driven at a frame frequency of between 200 to 280 Hz and a duty value of 200 or more.

US 4824211 also describes a driving method to improve contrast in a liquid crystal display. This is achieved by selecting a bias value which is between 1.2 and 4 times the optimum bias value. However, when the bias value is made larger, the power source voltage, i.e. the voltage applied to the liquid crystal driving a selection period, is also necessarily increased to ensure that an effective value of voltage to operate the liquid crystal device can be applied during a frame period. Hence, although the contrast is improved, it is at the expense of higher operating voltages.

EP 0443248A also describes a driving method to improve contrast in a liquid crystal display. The bias ratio is chosen to be less than the optimum bias ratio by using the formula $1/(\sqrt{N}-N/200)$ to $1/(\sqrt{N}-N/50)$. However, a duty ratio of at least 1/300 is required to provide the contrast improvement.

Hence, all of the above disclosures are concerned with driving schemes to improve display contrast with displays driven with a voltage averaging method but none is concerned with selecting the drive parameters so that low voltage drive of the liquid crystal devices may be achieved.

As described above, the time divisional driving system of the optimal bias method provides the driving condition by which the maximum contrast ratio is theoretically obtained for the simple matrix type of liquid crystal panel because the effective voltages of the ON voltage and the OFF voltage take maximum values.

However, low voltage drive which is required in recent liquid crystal devices cannot be achieved by such a time divisional driving system of optimal bias method. This can be explained based on the equation 4. For instance, Vop/a is the threshold value of the liquid crystal material required for operation with 1/16 duty (N = 16), the optimal bias (namely, a =5), and the liquid crystal drive voltage 3V (Vop = 3.0). Since it can be considered that the Voff is a threshold value, Equation 8 shows that the value can be calculated by Equation 4 as follows:

Equation 8

$$\text{threshold value} = \sqrt{(1 + \frac{5^2 - 4 \times 5 + 3}{16})} \times \frac{3}{5}$$

$$= 0.735$$

However, a threshold voltage is usually set at about 1.0 V even in a case of the lowest one available for liquid crystal material which is generally used. Therefore, such a low voltage liquid crystal device cannot be achieved.

The present invention is made to solve the above problems and in particular has, as an object, to provide a liquid crystal device which can be driven with a low voltage.

In order to solve the above problems, the present invention provides a liquid crystal device in accordance with that claimed in claim 1.

In the liquid crystal device thus constructed as described above, the level of a threshold value required for liquid crystal material can be set such that, as can be seen from the equation 4, it is possible to drive the liquid crystal device with a low voltage. For instance, under the condition of 1/16 duty and the liquid crystal drive voltage of 3V as in the above-mentioned case, the required threshold voltages for the liquid crystal material in 1/2, 1/2.5 and 1/3 bias are the following:

Equation 9

$$\text{threshold value (1/2 bias)} = \sqrt{(1 + \frac{2^2 - 4 \times 2 + 3}{16})} \times \frac{3}{2}$$

$$= 1.452 \text{ (V)}$$

Equation 10

$$\text{threshold value (1/2.5 bias)} = \sqrt{(1 + \frac{2.5^2 - 4 \times 2.5 + 3}{16})} \times \frac{3}{2.5}$$

$$= 1.172 \text{ (V)}$$

Equation 11

$$\text{threshold value (1/3 bias)} = \sqrt{(1 + \frac{3^2 - 4 \times 3 + 3}{16})} \times \frac{3}{3}$$

$$= 1.000 \text{ (V)}$$

Therefore, using this invention's drive method makes it possible that currently available liquid crystal material can be used to be driven at low voltages. If a liquid crystal panel is driven by 3 volt drive method, a liquid crystal material for this drive method should have a characteristics of 0.735V threshold voltage, as the result of equation 8 indicates. This means a 3 volt drive method needs a special liquid crystal material, and so usual material cannot be used in 3 volt drive.

Since the liquid crystal layer has the spiral structure twisted 180 degrees or more, the rising characteristic of the liquid crystal molecule is sharp for a voltage, and it is sensitive to very small change of the applied voltage. Therefore, the decrease of contrast ratio due to decrease of an electric driving margin can be suppressed.

The invention will now be described, by way of example only, with reference to the accompanying diagrammatic figures, in which;

Fig. 1 is a block diagram showing the structure of a liquid crystal device according to the present invention;
Fig. 2 is an explanatory diagram of the electrode structure of a matrix type of liquid crystal device;
Fig. 3 is a diagram for explaining a driving method of a conventional liquid crystal device;
Fig. 4 is a schematic cross sectional diagram of a liquid crystal panel of the liquid crystal device according to the present invention;
Fig. 5 is a diagram showing optical axes of the liquid crystal panel of the liquid crystal device according to the present invention;
Fig. 6 is a diagram showing the voltage-transmittance characteristic of liquid crystal of the liquid crystal device according to the present invention; and
Fig. 7 is a diagram showing the structure of a bias voltage generating circuit of a liquid crystal device according to the present invention.

The embodiments of the present invention will be described below in detail with reference to the accompanying drawings.

Fig. 1 is a block diagram showing one of the embodiments of the present invention. In the figure, a reference numeral 1 denotes a liquid crystal panel according to the present invention and the scanning electrodes and signal electrodes are connected to a scanning electrode driving circuit 2 and a signal electrode driving circuit 3, respectively. A bias voltage generated by a bias voltage generating circuit 4 is supplied to the scanning electrode driving circuit 2 and the signal electrode driving circuit 3 as a reference voltage.

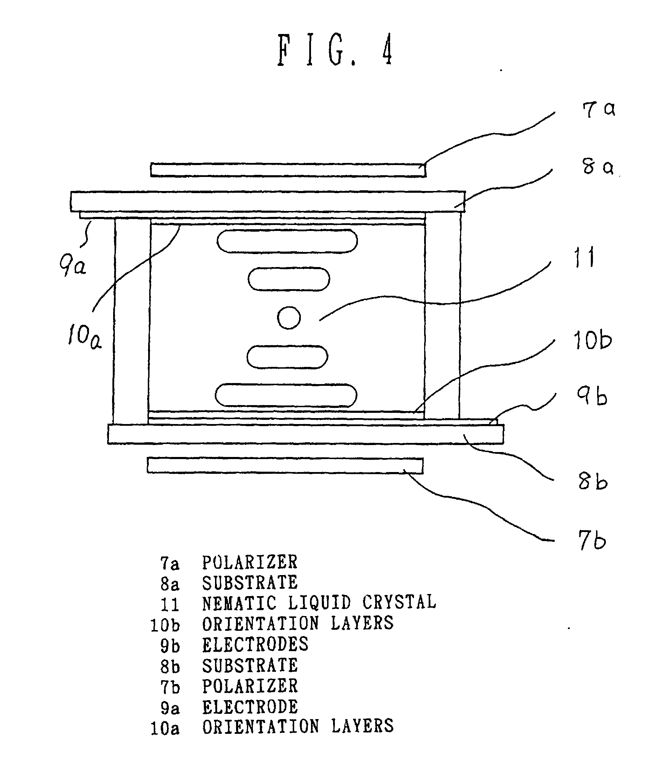

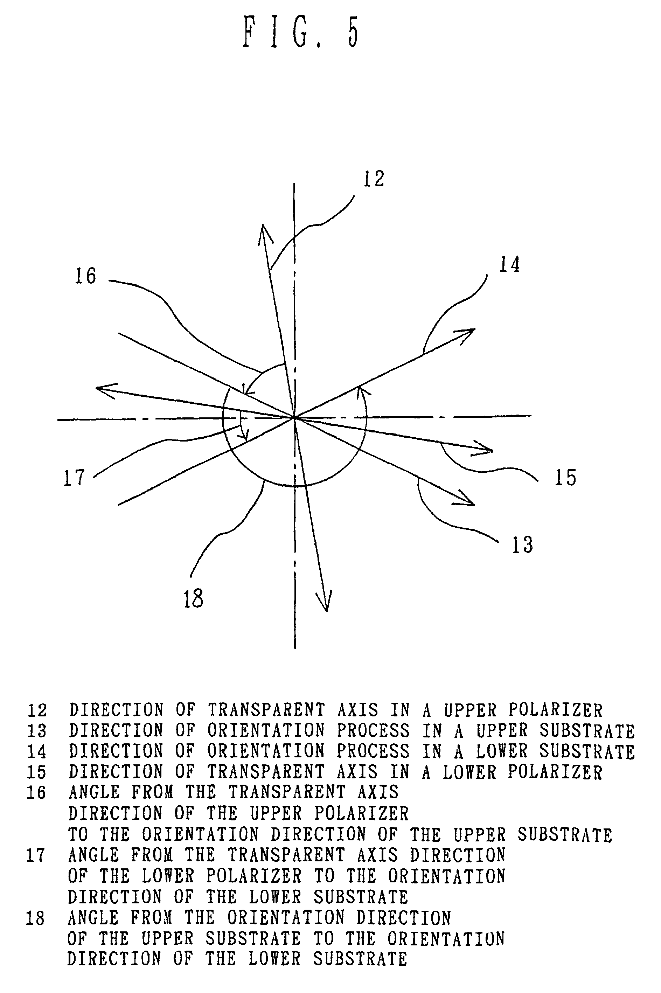

Fig. 4 is a vertical cross sectional view showing the structure of the above-mentioned liquid crystal panel 1 described in Fig. 1. In the figure, reference numerals 7a and 7b denote polarizers as a pair. A pair of substrates 8a and 8b provided inside thereof have electrodes 9a and 9b and are subjected to two types of orientation processing 10a and 10b such that liquid crystal molecules are arranged to have small inclination from a horizontal direction with respect to the substrates. Between the opposing substrates, the nematic liquid crystal 11 having a positive dielectric anisotropy is sandwiched to form a helical structure twisted 180 degrees or more.

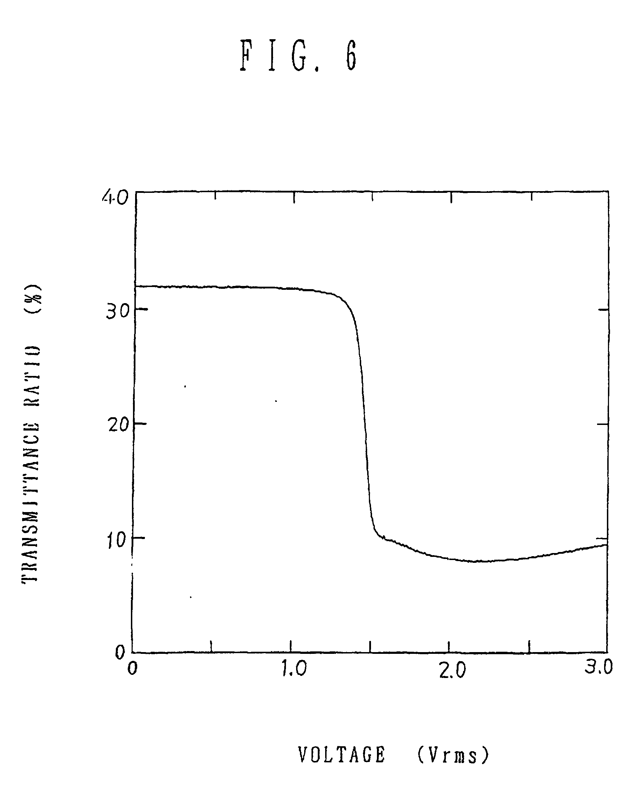

The liquid crystal device according to the specific embodiment of the present invention and the measurement result thereof will be described below. Fig. 5 is a view showing the liquid crystal panel of Fig. 4 in the optical axis direction. The upper parts of the liquid crystal device will be referred to with the suffix "a" and the lower parts with the suffix "b" herein. A reference numeral 12 denotes direction of transparent axis in an upper polarizer 7a, a reference numeral 13 denotes direction of orientation process in an upper substrate 8a, a reference numeral 14 denotes direction of orientation process in a lower substrate 8b, and a reference numeral 15 denotes direction of transparent axis in a lower polarizer 7b. A reference numeral 16 denotes angle from the transparent axis direction 12 of the upper polarizer 7a to the orientation direction 13 of the upper substrate 8a. This angle is referred to as "[A]" hereinafter. A reference numeral 17 denotes angle from the transparent axis direction 15 of the lower polarizer 7b to the orientation direction 14 of the lower substrate 8b. This angle is referred to as "[B]" hereinafter. A reference numeral 18 denotes angle from the orientation direction 13 of the upper substrate 8a to the orientation direction 14 of the lower substrate 8b. This angle is referred to as "[C]" hereinafter. The liquid crystal molecules have the spiral structure twisted in the counter-clockwise direction. It should be noted that the angles are taken to be positive in the counter-clockwise direction herein.

An example of the positive mode is shown in which a black level of a display colour is increased, that is, light is further shielded, as the applied voltage is increased.

Example 1

A liquid crystal panel is used in which the thickness d is 6.5μm, Δnd is 0.83μm. [A] = 55°, [B] = 55°, and [C] = 240°.

Fig. 6 is a diagram showing a voltage-transmittance characteristic of the liquid crystal panel used in the present embodiment.

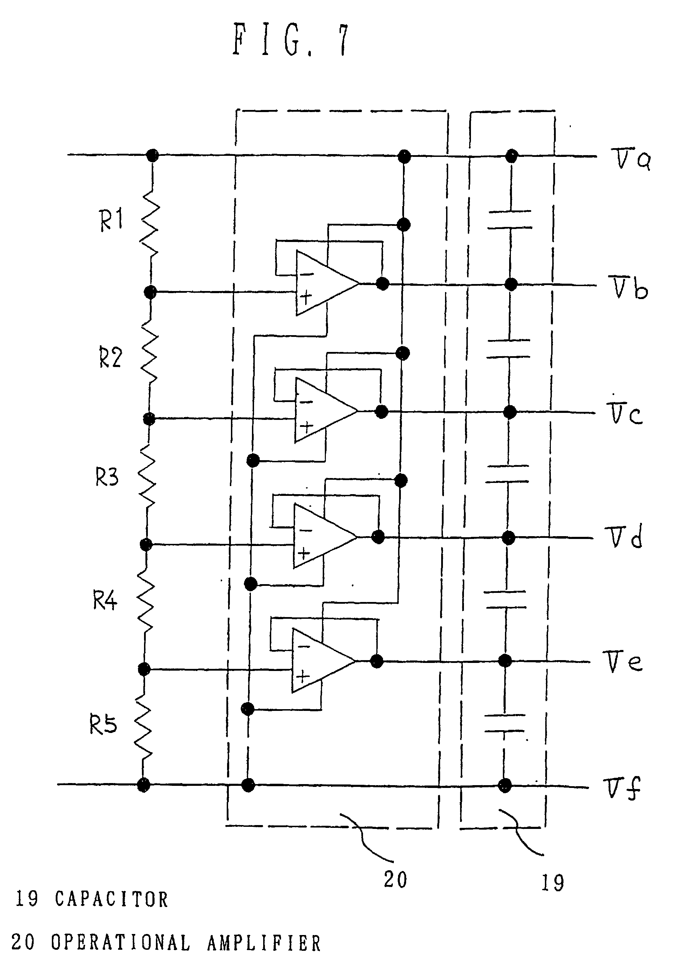

Fig. 7 is a diagram showing the structure of a bias voltage generating circuit used in the example 1. The reference voltages of six levels, Va, Vb, Vc, Vd, Ve and Vf (the reference voltages of three levels in 1/2 bias and those of four levels in 1/3 bias) are produced from the liquid crystal driving voltage Vop by a method of voltage division by use of resistors as bias voltages. It should be noted that it is needless to say that a capacitor may be provided between the bias voltages as shown in the figure by the dashed line section 19 or the stabilization of voltage level may be intended via a device such as an operational amplifier as shown in the figure by the dashed line section 20.

The reference voltages produced for bias ratios and the meanings are shown in the table 2, respectively.

Table 2

| reference voltage | 1/2 ≤ bias ratio < 1/3 when a bias ratio = 1/2, there are 3 levels of Va=Vb, Vc = Vd, Ve = Vf. | 1/3 ≤ bias ratio < 1/4 when a bias ratio is 1/3, there are 4 levels of Va, Vb = Vc, Vd = Ve, Vf. |
|---|---|---|
| Va | common selection, segment selection level | common selection, segment selection level |
| Vb | segment non-selection level | common non-selection level |
| Vc | common non-selection level | segment non-selection level |
| Vd | common non-selection level | segment non-selection level |
| Ve | segment non-selection level | common non-selection level |
| Vf | common selection, segment selection level | common selection, segment selection level |

Next, the measuring result of the driving voltages and contrast ratio in the liquid crystal device according to the present invention and prior art liquid crystal device are shown. The same liquid crystal panel is used for the measurement.

Table 3

|  | drive voltage (V) | contrast ratio |
|---|---|---|
| liquid crystal device (LCD) of the present invention (1/16 duty, 1/2 bias) | 2.9 | 3.0 |
| LCD of the present invention (1/16 duty, 1/2.5 bias) | 3.5 | 3.1 |
| LCD of the present invention (1/16 duty, 1/3 bias) | 3.9 | 3.1 |
| LCD of the preent invention (1/16 duty, 1/3.5 bias) | 4.4 | 3.2 |
| conventional LCD(1/16 duty, 1/5 bias) | 5.4 | 3.3 |

As seen from the table 3, in the liquid crystal device according to the present invention, it is possible to decrease the driving voltage of the liquid crystal panel to a great extent and the resulting drop of the contrast ratio can be suppressed to a level at which no problem would be caused in practice.

Example 2

The liquid crystal panel used in the example 1 is used and it is driven with a duty ratio in the range of 1/32 to 1/64. As a result, the driving voltage can be decreased in the same manner. The result is shown in the table 4.

Table 4

| | drive voltage (V) | contrast ratio |
| --- | --- | --- |
| LCD of the present invention (1/32 duty, 1/3 bias) | 4.2 | 2.9 |
| conventional LCD (1/32 duty, 1/6.7 bias) | 7.1 | 3.2 |
| LCD of the present invention (1/64 duty, 1/3 bias) | 5.1 | 2.4 |
| conventional LCD (1/64 duty, 1/9 bias) | 9.6 | 3.0 |

It should be noted that although the result in the duty ratio up to 1/64 is shown in the present embodiment, similar results can be obtained even in a case where the duty ratio exceeds 1/64, if a liquid crystal panel having further sharp threshold characteristic is used.

As described above, according to the present invention, it is made possible to drive a liquid crystal device with a low voltage, and therefore the liquid crystal device having a low power consumption can be obtained.

This invention provides a liquid crystal device comprising, a liquid crystal panel having a pair of substrates provided inside of a pair of polarizers, having opposing electrodes and being subjected to orientation processing, and a liquid crystal layer provided between the substrates and composed of nematic liquid crystal having the twisted helical structure; and a circuit for driving the liquid crystal panel, the liquid crystal device being characterized in that the liquid crystal layer has a helical structure twisted 180 degrees and more and the driving is performed based on a time divisional driving system with a duty N that is equal to or more than 16 but less than or equal to 64, and in which a bias value is equal to or larger than 2 and less than 4.

The aforegoing description has been given by way of example only and it will be appreciated by a person skilled in the art that modifications can be made without departing from the scope of the present invention.

## Claims

1. A liquid crystal device comprising:

   a liquid crystal panel having a pair of substrates provided inside a pair of polarisers, said substrates having opposing scanning and signal electrodes and being subjected to orientation processing;
   a liquid crystal layer provided between the substrates and composed of nematic liquid crystal having a twisted helical structure, said liquid crystal layer having a helical structure twisted 180 degrees or more; and
   a circuit for driving the liquid crystal panel, wherein the driving is performed based on a time divisional driving system with a duty "N" that is equal to or more than 16 but less than or equal to 64, where said duty "N" is the inverse of the ratio of the selection time of the scanning electrodes and the frame period;
   the liquid crystal device being **characterised in that** a bias value "a" is equal to or larger than 2 and less than 4, wherein scanning electrodes are supplied with a potential of $|(a-1)V|$ when being selected, and wherein signal electrodes are supplied with the voltage of -V and +V as an ON waveform and the voltage of +V and -V as an OFF waveform during the frame period of the positive polarity and the negative polarity respectively.

2. A liquid crystal device according to claim 1; wherein the circuit comprises a scanning electrode driving circuit (2) for sequentially applying selecting signals, a signal electrode driving circuit (3) for applying data signals in synchronism with the application of the selecting signals, and a bias voltage generating circuit (4) for supplying a bias voltage to said scanning and signal electrode driving circuits as a reference voltage.

3. A liquid crystal device according to claim 2; wherein the bias voltage generating circuit includes means of applying a plurality of bias voltages of different levels to the liquid crystal panel depending upon the bias value.

**Patentansprüche**

1.  Flüssigkristallvorrichtung, umfassend:

    eine Flüssigkristalltafel, die ein Paar von Substraten aufweist, die in Inneren eines Paares von Polarisatoren vorgesehen sind, wobei die Substrate gegenüberliegende Abtast- und Signalelektroden aufweisen und einer Orientierungsverarbeitung unterworfen werden;
    eine Flüssigkristallschicht, die zwischen den Substraten vorgesehen ist und einen nematischen Flüssigkristall mit einer verdrehten, schraubenlinienförmigen Struktur umfaßt, wobei die Flüssigkristallschicht eine schraubenlinienförmige Struktur aufweist, die um 180° oder mehr verdreht ist; und
    eine Schaltung zum Ansteuern der Flüssigkristalltafel, wobei die Ansteuerung auf der Grundlage eines Zeitbereich-Ansteuersystems durchgeführt wird mit einem Tastverhältnis "N", das gleich oder größer als 16, jedoch kleiner oder gleich 64 ist, wobei das Tastverhältnis "N" die Umkehrung des Verhältnisses der Auswahlzeit der Abtastelektroden und der Rahmenperiode ist;

    wobei die Flüssigkristallvorrichtung **dadurch gekennzeichnet ist, daß** ein Vorspannungswert "a" gleich oder größer als 2 und kleiner als 4 ist,
    wobei die Abtastelektroden mit einem Potential von |(a - 1)V| beaufschlagt werden, wenn sie ausgewählt sind, und wobei die Signalelektroden mit der Spannung -V und +V als eine EIN-Signalform und der Spannung +V und -V als eine AUS-Signalform während der Rahmenperiode der positiven Polarität bzw. der negativen Polarität beaufschlagt werden.

2.  Flüssigkristallvorrichtung nach Anspruch 1, bei der die Schaltung eine Abtastelektroden-Ansteuerschaltung (2) zum sequentiellen Anlegen von Auswahlsignalen, eine Signalelektroden-Ansteuerschaltung (3) zum Anlegen von Datensignalen synchron mit dem Anlegen der Auswahlsignale, und eine Vorspannungserzeugungsschaltung (4) zum Zuführen einer Vorspannung zu den Abtast- und Signalelektroden-Ansteuerschaltungen als Referenzspannung umfaßt.

3.  Flüssigkristallanzeigevorrichtung nach Anspruch 2, bei der die Vorspannungserzeugungsschaltung Mittel zum Anlegen mehrerer Vorspannungen mit unterschiedlichen Pegeln an die Flüssigkristalltafel in Abhängigkeit vom Vorspannungswert enthält.

**Revendications**

1.  Dispositif à cristaux liquides comprenant :

    un panneau de cristaux liquides comportant une paire de substrats placés à l'intérieur d'une paire de polarisateurs, lesdits substrats comportant des électrodes de balayage et de signal opposées et étant soumis à un processus d'orientation ;
    une couche de cristaux liquides placée entre les substrats et composée de cristaux liquides nématiques ayant une structure hélicoïdale en hélice, ladite couche de cristaux liquides ayant une structure hélicoïdale en hélice sur 180° ou plus ; et
    un circuit pour commander le panneau de cristaux liquides, dans lequel la commande est réalisée en se basant sur un système de commande à temps divisé avec un facteur "N" qui est supérieur ou égal à 16 mais inférieur ou égal à 64, où ledit facteur "N" est l'inverse du rapport du temps de sélection des électrodes de balayage et de la période de trame ;
    le dispositif à cristaux liquides étant **caractérisé en ce qu'**une valeur de polarisation "a" est supérieure ou égale à 2 et inférieure à 4, dans lequel des électrodes de balayage sont munies d'un potentiel de |(a-1)V| quand elles sont sélectionnées, et dans lequel des électrodes de signal sont alimentées par la tension de -V et +V comme onde ON et par la tension +V et -V comme onde OFF pendant respectivement la période de trame de la polarité positive et de la polarité négative.

2.  Dispositif à cristaux liquides selon la revendication 1, dans lequel le circuit comprend un circuit de commande d'électrode de balayage (2) pour appliquer séquentiellement des signaux de sélection, un circuit de commande d'électrode de signal (3) pour appliquer les signaux de données en synchronisme avec l'application des signaux de sélection, et un circuit générateur de tension de polarisation (4) pour fournir une tension de polarisation aux dits circuits de commande d'électrode de signal et de balayage comme tension de référence.

3. Dispositif à cristaux liquides selon la revendication 2, dans lequel le circuit générateur de tension de polarisation comprend des moyens pour appliquer une pluralité de tensions de polarisation de différents niveaux au panneau de cristaux liquides en fonction de la valeur de polarisation.

# FIG. 1

```
                              ┌─────────────────────────────────────┐  ⌐ 3
                              │  SIGNAL ELECTRODE DRIVING CIRCUIT   │
                              └─────────────────────────────────────┘

        ┌──────────────────┐       ┌──────────────────────┐
        │ SCANING ELECTRODE│       │                      │
        │ DRIVING CIRCUIT  │───────│  LIQUID CRYSTAL PANEL│
        └──────────────────┘       └──────────────────────┘
           2                                      1

        ┌──────────────────────────────────────┐
        │  BIAS VOLTAGE GENERATING CIRCUIT      │  ⌐ 4
        └──────────────────────────────────────┘
```

# FIG. 2

SIGNAL ELECTRODES
6

SCANNING
ELECTRODES    5

# FIG. 3

# F I G. 4

7a

8a

11

10b

9b

8b

7b

9a

10a

| | |
|---|---|
| 7a | POLARIZER |
| 8a | SUBSTRATE |
| 11 | NEMATIC LIQUID CRYSTAL |
| 10b | ORIENTATION LAYERS |
| 9b | ELECTRODES |
| 8b | SUBSTRATE |
| 7b | POLARIZER |
| 9a | ELECTRODE |
| 10a | ORIENTATION LAYERS |

# F I G. 5

12 DIRECTION OF TRANSPARENT AXIS IN A UPPER POLARIZER
13 DIRECTION OF ORIENTATION PROCESS IN A UPPER SUBSTRATE
14 DIRECTION OF ORIENTATION PROCESS IN A LOWER SUBSTRATE
15 DIRECTION OF TRANSPARENT AXIS IN A LOWER POLARIZER
16 ANGLE FROM THE TRANSPARENT AXIS
   DIRECTION OF THE UPPER POLARIZER
   TO THE ORIENTATION DIRECTION OF THE UPPER SUBSTRATE
17 ANGLE FROM THE TRANSPARENT AXIS DIRECTION
   OF THE LOWER POLARIZER TO THE ORIENTATION
   DIRECTION OF THE LOWER SUBSTRATE
18 ANGLE FROM THE ORIENTATION DIRECTION
   OF THE UPPER SUBSTRATE TO THE ORIENTATION
   DIRECTION OF THE LOWER SUBSTRATE

EP 0 674 304 B1

# F I G. 6

VOLTAGE (Vrms)

F I G. 7

19 CAPACITOR

20 OPERATIONAL AMPLIFIER